# EUROPEAN PATENT APPLICATION

(11) **EP 4 745 811 A1**
(43) Date of publication of application: **20.05.2026**
(21) Application number: 24212996.3
(22) Date of filing: 14.11.2024
(51) Int. Cl.: G06F 21/55, H04L 9/32, H04L 9/40, H04W 12/08

(54) **METHOD FOR MANAGING A SECURE ELEMENT FOR AN AUTOMOTIVE APPLICATION AND A CONTROL SYSTEM**

(71) Applicant: NXP B.V., 5656 AG Eindhoven (NL)
(72) Inventor: Haslinger, Dorian, 5656 AG Eindhoven (NL); Manninger, Marc, 5656 AG Eindhoven (NL); Khullar, Naman, 5656 AG Eindhoven (NL)
(74) Representative: Krott, Michel

(57) **Abstract**

There is disclosed a method for managing a secure element for an automotive application. The method comprises receiving a control signal via a first data transmission path. The control signal comprises instructions for controlling the automotive application. The method further comprises determining whether the received control signal is authorized or not. If the control signal is authorized, the method further comprises increasing an attack counter, and locking the secure element, if the attack counter is equal or higher than a predefined locking value. The method further comprises unlocking the secure element in response to successful performing of a secure function. Further a control system for an automotive application and a computer program product is disclosed.

## Description

### TECHNICAL FIELD

The present disclosure relates to a method for managing a secure element for an automotive application. The method comprises receiving a control signal via a first data transmission path, the control signal comprising instructions for controlling the automotive application. The method further comprises determining whether the received control signal is authorized or not, and, in response to determining that the control signal is not authorized, increasing an attack counter. The method further comprises locking the secure element if the attack counter is equal or higher than a predefined locking value and unlocking the secure element in response to successful performing of a secure function. The disclosure further relates to a control system for an automotive application and a computer program product.

The disclosure may hence relate to the technical field of automotive technology, in particular with respect to security by using a secure element and its usage.

### TECHNICAL BACKGROUND

In automotive technology, secure elements, SE, or similar devices are used in automotive applications to secure a broad range of use cases like car-side digital key management for smart access, secure connectivity, secure infotainment features, also called strongbox, and many more. Secure elements are used for a variety of functions, in order to increase security of different vehicle functions and to prevent tampering with critical vehicle components.

The manufacturing process of a vehicle and/or electronic control unit, ECU, may impact the behavior of the SE. Once a car is in the field, the electronics of a car may be impacted by environmental conditions, (e.g., extreme weather conditions, bumpy roads etc.) which also may have an influence on the behavior of a SE. Due to many different conditions, a SE may detect attacks which are not actually caused by an attacker but by a condition which is not yet classified as a "normal" condition by the Secure Element. This may be called a "false attack".

After a certain number of attacks registered by the SE, the SE typically will enter a restricted mode and the target application (e.g. CCC digital key) cannot be used anymore without using an issuer security domain, ISD, key to exit the restricted mode. ISD keys shall not be stored in an unsecured automotive microcontroller, MCU, or similar device in the car, and therefore a secure backend connection or going to a repair shop is required to reset the attack counter and re-enable a normal operation, i.e. exit the restricted mode.

This may not always be easy or possible at all, is not a good user experience and is costly overall. If the SE cannot be used, it may even lead to car users not being able to enter and/or start the car or use any other secure application.

In other words, there are many different use cases and car architectures which leads to many different mission profiles for a secure element. As one example, keys, which can for example be used to unlock the doors of a vehicle in order to enter the vehicle, are normally stored in a secure element, SE, or a similar secure device. If a SE enters a restricted mode due to attacks or presumed attacks, it is cumbersome to re-establish the previous non-restricted mode.

The vehicle system may have a cautious policy, that means it would rather identify an attack when no real attack has occurred, i.e. false positive, than not miss a real attack, i.e. false negative. As such, the system may detect an attack from an electrical noisy environment, such as voltage spikes on the supply or unstable power on / off scenarios.

Additional keys with higher privileges, e.g. a master key to unlock the SE from restricted mode to normal mode can also not be stored on any part of the vehicle, since this would be insecure. An example for such a master key is a so-called Issuer Security Domain, ISD, key, which can for example be used in a garage or body shop to access the SE and re-establish normal mode.

### SUMMARY OF THE DISCLOSURE

Thus, there may be the problem that during normal operation, an SE may detect attacks and things that are not actually caused by an attacker but by a "random" environmental condition. These events are tracked via a security counter, and when too many, i.e. a certain predetermined number or frequency, i.e. number per time span, of such events are detected, the result may be that the SE is locked preventively, i.e., entering secure restricted mode, SRM, in order to prevent unauthorized access or operation. In an automotive environment, this may happen more frequently than in other electronic environments, e.g. a smartphone. Once a restricted mode is engaged, ISD keys can be used to exit SRM and optionally also reset the attack counter, but that requires a secure backend connection or a visit to an authorized repair shop.

There may be a need to provide improved techniques to handle a secure restricted mode for automotive applications and to recover a SE securely from the restricted mode, in a controlled environment without any significant impact for the end customers. A method for managing a secure element for an automotive application, a control system for an automotive application, and a computer program product is provided. Additionally, with the disclosed techniques, highly expensive vehicle recalls by the original equipment manufacturer, OEM, i.e. the vehicle manufacturer, may be prevented.

According to an aspect of the present disclosure, it is described a method for managing a secure element for an automotive application, the method comprising receiving a control signal via a first data transmission path, the control signal comprising instructions for controlling the automotive application. The method also comprises determining whether the received control signal is authorized or not. And the method further comprises in response to determining that the control signal is not authorized, increasing an attack counter, locking the secure element, if the attack counter is equal or higher than a predefined locking value, and unlocking the secure element in response to successful performing of a secure function.

According to a further aspect of the present disclosure, it is described a control system for an automotive application, the control system comprising at least a processor, a memory, a first data transmission element, and a secure element, wherein the first data transmission element is configured to receive a control signal, the control signal being configured to control the automotive application. The processor is configured to determine whether the received control signal is authorized or not, increase an attack counter in the memory, if the control signal is not authorized, lock the secure element, if the attack counter is equal or higher than a locking value predefined in the memory, and unlock the secure element after a secure function has been performed successfully.

According to an exemplary embodiment, the invention may be based on the idea that after an SE is locked, normal operation can be re-established by performing an entitled secure function, which can consist, for example, of a valid, normal operation like a car connectivity consortium-digital key, CCC-DK, standard transaction and a two-factor authentication on a mobile phone.

According to another exemplary embodiment, the handling may also be improved before the secure element locks to secure restricted mode, i.e. while the SE can still be operated normally, by decreasing the attack counter based on some user-triggered operation, which is determined to be a valid operation, to avoid that the attack counter is getting too high, i.e. reaching the predetermined threshold for locking, due to environmental noise or through real attacks. For example, the attack counter may be reduced by one, after every five normal operations, such normal operations may be based on cryptographic principles, like so-called car connectivity consortium, CCC digital key, fast transactions.

These techniques can for example be achieved through changes in an applet for highly secure and performant CCC digital key management in a security-certified environment, for example a Java Card based operation system. In particular, an application programming interface, API, may be connected to applets for enabling this functionality, and permission may be provided to use that API on selected applets only.

With the presented techniques, secure and controlled restoring of a SE after being put into restricted mode, which may be caused by an unwanted attack, can be effected. Further, a car user may find the presented restoration more convenient since it is not necessary to contact a car repair shop for being locked out of the car. Also, very expensive recalls of vehicle fleets can be prevented. A normal operation of an applet installed on the SE (e.g., a standard and fast transaction of a CCC Digital Key applet for smart access) can decrease the attack counter. The normal operation may be specially entitled. The operation may serve as proof for a controlled environment, thus the likelihood of a locked SE may be reduced. In case the SE still locked itself, by unexpected environmental conditions, or by a real attack the end customer can unlock the SE and may also reset the attack counter. This can be effected by e.g., using a two-factor authentication using an additional device and a CCC Digital Key standard transaction. This may reset or reduce the attack counter and also may indicate that the car is in a controlled environment. The two-factor authentication on the additional device may for example be face recognition, fingerprint or a pin code, and the device may be a smart phone, wearables, a tablet, laptop or any other type of computer. Even a phone call may be considered as a two-factor authentication. Efficient and secure combination of SE attack prevention methods and an interface to secure applets to reset attacks are provided. The flexible architecture and methods to overcome the problem of unpredictable conditions of vehicle usage in the field or during manufacturing are described in further detail in the following.

The aspects defined above, and further aspects of the disclosure are apparent from the examples of embodiment to be described hereinafter and are explained with reference to these examples of embodiment. The disclosure will be described in more detail hereinafter with reference to examples of embodiment but to which the disclosure is not limited.

It is further noted that secure elements as described herein are not only used in automotive technology field, but are also used in electronic devices, like smart phones, credit cards, passports and other ID cards. In the vehicle context, SEs can be used in car keys, or fobs, telemetric vehicle systems, battery management, communication gateways and for other purposes. Secure elements can be employed to gain access to the vehicle or to a particular function of the vehicle, e.g. in the vehicle electronic system, but also to ensure the usage of original components, like a battery.

### EXEMPLARY EMBODIMENTS

According to an embodiment the method may further comprise resetting the attack counter in response to the successful performing of the secure function. In the control system the processor may further be configured to reset the attack counter in the memory after the secure function has been performed. Thereby together with the unlocking of the SE, the attach counter can be reset. Since with the secure function, authorized access can be performed, it is useful to reset the attack counter.

According to an embodiment the method may further comprise blocking of processing the control signal, in response to determining that the control signal is not authorized. In the control system the processor may further be configured to block processing of control signals that are not authorized. Any unauthorized control signal can also be blocked, thereby increasing the overall security.

According to an embodiment the method may further comprise, in response to determining that the control signal is authorized, processing the control signal to control the automotive application on the basis of the control signal, and increasing an authorized access counter. In the control system the processor may further be configured to process control signals that are authorized to control the automotive application, and to increase an authorized access counter in the memory for each processed authorized control signal. By employing an authorized access counter, the method and the system may also be enabled to track authorized accesses.

According to an embodiment the method may further comprise decreasing the attack counter, if the authorized access counter is equal to or higher than a predefined reduction value. In the control system the processor may further be configured to decrease the attack counter, if the authorized access counter is equal to or higher than a predefined reduction value in the memory. By this, the handling of the automotive application can further be improved, since the reduction of the attack counter after an authorized access may add to less locking of the SE. In particular, if the attack counter is increased due to environmental conditions, the decreasing after authorized accesses will lead to a longer time span until the SE is locked in this manner.

According to an embodiment, determining whether the received control signal is authorized or not may comprise evaluating an attack threat level of the unauthorized control signal, and increasing the attack counter increases the attack counter by a predefined threat value, wherein the predefined threat value is depending on the evaluated attack threat level. In the control system the processor is further configured to evaluate an attack threat level for an unauthorized control signal, and to increase the attack counter by a predefined threat value, that depends on the evaluated attack threat level. With this the attack counter may even be more useful, since presumed attack can be weighted depending on their severity. In that case, a severe attack, which is associated with a higher threat level, can cause an immediate or earlier lock of the SE, while presumed attacks which may carry a higher probability to be merely environmental effects, may contribute to the attack counter by a lower increase, thus it will take longer that the SE is locked in this manner.

According to an embodiment, performing the secure function may comprise processing one or more control signals that have been determined to be authorized and receiving an authorization confirmation via a second data transmission path. In the control system the processor may, for performing the secure function, be configured to process one or more authorized control signals and receive an authorization confirmation via a second data transmission element. As stated before, one possible implementation of the secure function is a two-factor authentication, which may constitute in receiving an authorization confirmation via a second data transmission path. With this, the SE can be unlocked securely, since the possibility that both ways are attacked successfully is significantly lower.

According to an embodiment, a computer program product comprises instructions which, when the program is executed by a computer, cause the computer to carry out the method as described above.

### BRIEF DESCRIPTION OF THE DRAWINGS

Figure 1 shows a schematic configuration of a control system according to an exemplary embodiment of the disclosure.
Figure 2 shows a flow chart illustrating a method for managing a secure element for an automotive application according to an exemplary embodiment of the disclosure.

Generally, optional features are depicted in a dashed manner in the Figures.

### DETAILED DESCRIPTION OF THE DRAWINGS

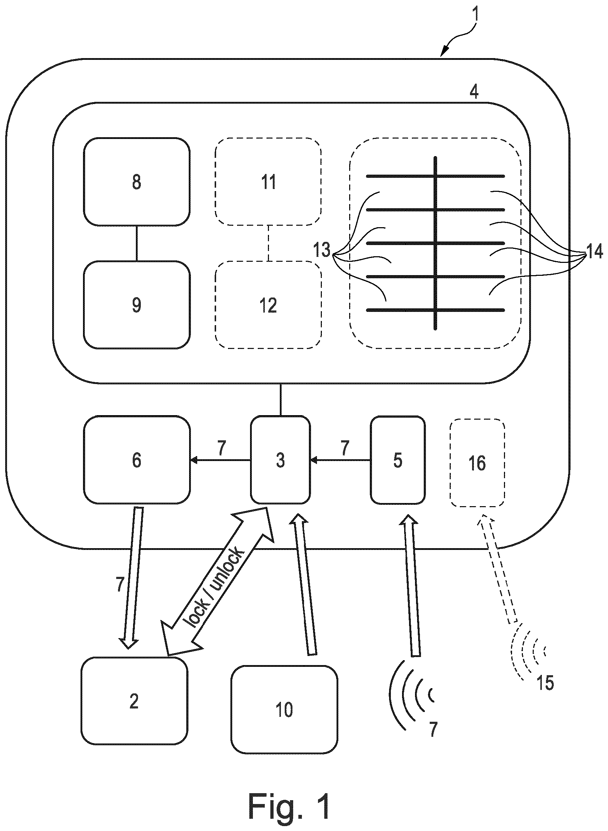

Figure 1 shows a schematic configuration of a control system according to an exemplary embodiment of the disclosure.

In particular, Figure 1 shows a control system 1 for an automotive application 2. The control system comprises at least a processor 3, a memory 4, a first data transmission element 5, and a secure element 6.

Memory 4 may hold a plurality of data, counters and variables, together with other data that is regularly stored in a vehicle. In Figure 1, attack counter 8 and locking value 9 are depicted, together with the optional features of an authorized access counter 11, a reduction value 12, an attack threat level 13, and a threat value 14.

The first data transmission element 5 is configured to receive a control signal 7, which is depicted using a wireless pictogram in Figure 1. However, the control signal can be transmitted to the first data transmission element 5 also using a wired connection, touch-based technology or via an input device like a keyboard or buttons. It is also noted that reference sign 7 is associated with several arrows in Figure 1, which are meant to depict the route that the control signal may take through control system 1 and to automotive application 2.

The received control signal 7 is configured to control the automotive application 2, i.e. the control signal comprises input information, like commands or data, for the automotive application 2.

The processor 3 is configured to determine whether the received control signal 7 is authorized or not. If processor 3 determines that the received control signal 7 is not authorized, the processor 3 is configured to increase an attack counter 8 in memory 4. Processor 3 is further configured to lock the secure element 6, if the attack counter 8 reaches a value that is equal or higher than a locking value 9. Locking value 9 can be predefined in memory 4 by the manufacturer, but may also be modified by a mechanic, the driver or the end user. Processor 3 is further configured to unlock the secure element 6 after a secure function 10 has been performed successfully. Secure function 10 is external to the control system 1, and can take many different forms, which are described in more detail below.

Processor 3 may further be configured to reset attack counter 8 in memory 4 after the secure function 10 has been performed. It is alternatively possible that the attach counter 8 is not reset, which means set to zero, but merely reduced by a predefined value.

Processor 3 may further be configured to block further processing of control signals 7, if they have been determined to be unauthorized. Thereby, certain control signals 7, for example such signals used for unlocking or gaining access to a vehicle, an application or a device, can be blocked. In certain situations, it might also be more secure to allow control signals 7 to be executed, i.e. forwarded or processed, for example, emergency stop signals or emergency shut-off signals, which might indicate a fire or similar critical situation, although the control signal 7 is unauthorized. The details of this implementation need to be adjusted to the concrete nature of the automotive application 2 and the control signal 7.

Processor 3 may further be configured to process control signals 7 that are authorized to control the automotive application 2, and to increase an authorized access counter 11 in memory 4 for each processed authorized control signal 7.

In addition to aforementioned option to reset or decrease the attack counter 8 in response to a successful secure function 10, the processor 3 may further by configured to decrease the attack counter 8, if the authorized access counter 11 is equal to or higher than a predefined reduction value 12 in memory 4.

The processor 3 may be configured to process one or more authorized control signals 7 and receive an authorization confirmation 15 via a second data transmission element 16. Thereby, the secure function 10 can serve as two-factor authentication, wherein the second data transmission element 16 constitutes the second factor, which is separate from the first factor. The second data transmission element 16 can be a code or PIN entry in the car, or using a physical device like a car key, a fob, a code generator, or something similar. The two-factor authentication can also be performed in receiving or performing a phone call with a central administrative unit, that has remote access to the car electronic and can perform the secure function 10 or part thereof. Even sending an email to a particular email address which is processed in a system that has remote access to the vehicle can serve as a second factor. In this case, overall security can even be further improved, by requiring the email to contain a password, passphrase, signature, certificate, or other credentials or cryptographic element.

Further, processor 3 may further be configured to evaluate an attack threat level 13 for an unauthorized control signal 7. The determination of the attack threat level 13 can be based on different factors, like transmission route of the control signal 7 that has been determined to be an attack, transmission duration, repetitions of the same control signal 7, signal strength, the control signal having been received before, which in particular is useful, if the control signals 7 by their nature are not reused and, for example by using a one-time hash, a repeated signal means the signal was intercepted and copied, and other factors. Memory 4 may hold a table or other association of attack threat levels 13 and threat values 14, such that the attack counter 8 can be increased by a predefined threat value 14, that is associated with the attack threat level 13. A more sever attack can thus lead to a higher increase in the attack counter 8 and thus to a faster locking of the secure element 6.

It is noted that this systematic approach can also be used for other counters as disclosed herein. The authorized access counter 11 can be increased variably based on the nature of the authorized access that was detected. For example, an access with a physical device, like a car key or fob can result in a higher increase of the authorized access counter 11, while authorized access by voice identification or PIN code can result in a lower increase of the authorized access counter 11.

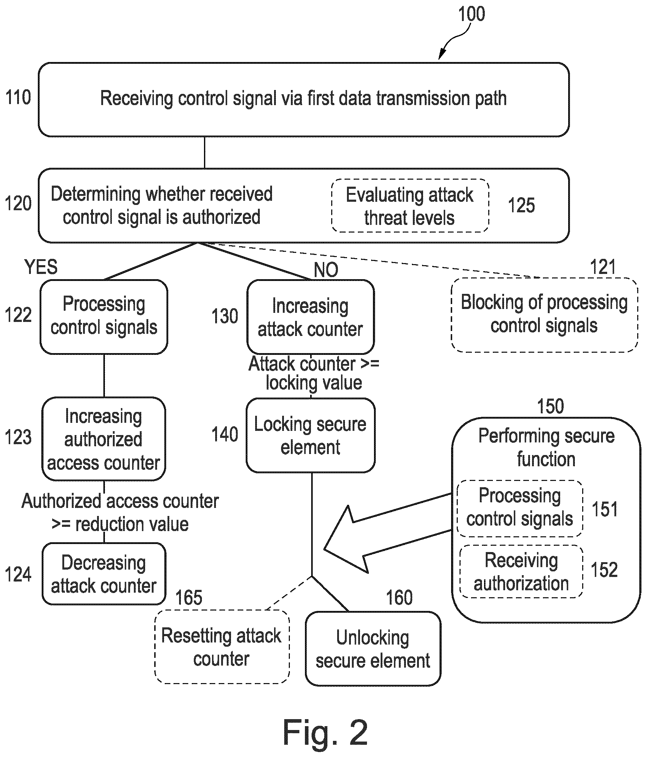

Figure 2 shows a flow chart illustrating method 100 for managing a secure element for an automotive application according to an exemplary embodiment of the disclosure. Generally, the details and options discussed with the control system above also may apply to the method as described below.

As shown in Figure 2, method 100 for managing a secure element for an automotive application starts with receiving 110 a control signal via a first data transmission path. As stated above the first data transmission path does not need to be wireless, it can also be touch-based or performed with a keyboard or buttons. The control signal comprises instructions for controlling the automotive application.

Method 100 then proceeds to determining 120 whether the received control signal is authorized or not. If it is determined in step 120 that the control signal is not authorized, method 100 proceeds to increasing 130 an attack counter. If then the attack counter is equal or higher than a predefined locking value, method 100 proceeds to locking 140 the secure element. Finally, in response to a successful performing 150 of a secure function, method 100 proceeds to unlocking 160 the secure element again.

Method 100 may further comprise resetting 165 the attack counter in response to the successful performing of the secure function.

Method 100 may further comprise blocking 121 of processing the control signal, in response to determining 120 that the control signal is not authorized.

Method 100 may further comprise, in response to determining 120 that the control signal is authorized, processing 122 the control signal to control the automotive application on the basis of the control signal and increasing 123 an authorized access counter.

Method 100 may further comprise decreasing 124 the attack counter, if the authorized access counter is equal to or higher than a predefined reduction value.

In the above-described method 100 performing 150 the secure function may comprise processing 151 one or more control signals that have been determined to be authorized and receiving 152 an authorization confirmation via a second data transmission path. As an example, thereby the two-factor authentication can be achieved.

In method 100, determining 120 whether the received control signal is authorized or not may comprise evaluating 125 an attack threat level of the unauthorized control signal. The increasing 130 of the attack counter may increase the attack counter by a predefined threat value, wherein the predefined threat value depends on the evaluated attack threat level. As stated above, this may also be applied to other counters, like the authorized access counter.

In summary, a method for managing a secure element for an automotive application is disclosed. The method comprises receiving a control signal via a first data transmission path. The control signal comprises instructions for controlling the automotive application. The method further comprises determining whether the received control signal is authorized or not. If the control signal is authorized, the method further comprises increasing an attack counter, and locking the secure element, if the attack counter is equal or higher than a predefined locking value. The method further comprises unlocking the secure element in response to successful performing of a secure function.

One example for an implementation is described below as a use case where a car connectivity consortium, CCC, digital key applet, also referred to as CCC digital key applet, is used on the vehicle side. The applet may manage the complex security and authentication flows as defined by the CCC digital key technical specifications. The CCC digital key applet may perform end-to-end, E2E, authentication with the SE in a smart phone and then grants access to the vehicle. It may rely on symmetric advanced encryption standard, AES, techniques and asymmetric elliptic curve cryptography, ECC, techniques.

Commonly, only environments like Java Card based operation systems have access to the attack counter, AC, and only after successful authentication with the issuer security domain, ISD keys, a reset is possible. In accordance with the present disclosure of the improved secure restricted mode handling for automotive applications concept, a special Java Card based application programming interface, API, may be defined to allow other certified and proven applets to also have access to the AC. Depending on the use case the applet will be able to decrease the AC or even reset it.

Since the CCC digital key applet is already storing the highly valuable digital key, it can also be granted access to the special Java Card based API. Therein the SE and/or the Java Card based system will rely on the applet for performing security checks, i.e. authorization and authentication checks, like e.g. an ownership check. If the applet can ensure that an incoming signal is authorized, that means that an authorized owner or an authorized user is trying to access the car. If, further, the authorized incoming signal comprises a standard or fast transaction, then decrementing the AC or even resetting may be held to be acceptable.

In this context, CCC digital key transactions from an SE in a vehicle to a CCC digital key device, are understood to be a fast transaction if symmetric secrets are used. For example, one application protocol data unit, APDU, command and response pair.

Likewise, a standard transaction is based on asymmetric cryptography and uses two application protocol data unit, APDU, commands and response pairs.

To further increase the security, e.g., a two-factor authentication with the car owner's smart phone may be added to the authorized function call, e.g. the car connectivity consortium digital key, CCC DK, standard transaction, to perform an authorized reset of the AC.

Even if the SE is locked because the AC reached its limit, the authorized applet, e.g., CCC DK, may still be selected and only the authorized function, e.g., CCC DK standard transaction, can be called.

Other functions of the authorized applet are not available, so that critical function calls, e.g., CCC DK owner pairing, are not possible.

In the above scenario, only the issuer security domain, ISD, is selectable when the SE is in restricted mode. Using this concept, it is possible to grant higher privileges to an applet, e.g., an CCC DK applet, so that it can even be selected if the SE is already in the restricted mode. This privilege can be controlled via the ISD. This enhances the security domains and trust provisioning.

During the secure trust provisioning, a decision could be made whether to grant such a privilege to an applet or not. Many factors could be identified, e.g. whether the manufacturer of the applet is trustworthy, whether the applet has a certain certification, etc., which could be taken into account for this decision. In cases when an applet is provisioned over-the-air, special Java Card based config item scripts or Applet Update service scripts can be used to enable the ISD to grant such a special privilege.

### Reference signs

- 1: Control system
- 2: Automotive application
- 3: Processor
- 4: Memory
- 5: First data transmission element
- 6: Secure element
- 7: Control signal
- 8: Attack counter
- 9: Locking value
- 10: Secure function
- 11: Authorized access counter
- 12: Reduction value
- 13: Attack threat level
- 14: Threat value
- 15: Authorization confirmation
- 16: Second data transmission element
- 100: Method for managing secure elements
- 110: Receiving control signals
- 120: Determining whether control signal is authorized or not
- 121: Blocking of processing control signals
- 122: Processing control signals
- 123: Increasing authorized access counter
- 124: Decreasing attack counter
- 125: Evaluating attack threat levels
- 130: Increasing attack counter
- 140: Locking secure elements
- 150: Performing secure functions
- 151: Processing control signals
- 152: Receiving authorization confirmation
- 160: Unlocking secure elements
- 165: Resetting attack counter

## Claims

1. A method (100) for managing a secure element for an automotive application, comprising
receiving (110) a control signal via a first data transmission path, the control signal comprising instructions for controlling the automotive application;
determining (120) whether the received control signal is authorized or not;
in response to determining (120) that the control signal is not authorized:
increasing (130) an attack counter;
locking (140) the secure element, if the attack counter is equal or higher than a predefined locking value; and
unlocking (160) the secure element in response to successful performing (150) of a secure function.

2. The method (100) of claim 1, further comprising resetting (165) the attack counter in response to the successful performing of the secure function.

3. The method (100) of claim 1 or 2, further comprising blocking (121) of processing the control signal, in response to determining (120) that the control signal is not authorized.

4. The method (100) of any one of claims 1 to 3, further comprising, in response to determining (120) that the control signal is authorized,
processing (122) the control signal to control the automotive application on the basis of the control signal, and
increasing (123) an authorized access counter.

5. The method (100) of claim 4, further comprising decreasing (124) the attack counter, if the authorized access counter is equal to or higher than a predefined reduction value.

6. The method (100) of any one of claims 1 to 5, wherein determining (120) whether the received control signal is authorized or not comprises evaluating (125) an attack threat level of the unauthorized control signal, and wherein increasing (130) the attack counter increases the attack counter by a predefined threat value, wherein the predefined threat value is depending on the evaluated attack threat level.

7. The method (100) of any one of claims 1 to 6, wherein performing (150) the secure function comprises
processing (151) one or more control signals that have been determined to be authorized; and
receiving (152) an authorization confirmation via a second data transmission path.

8. A control system (1) for an automotive application (2), the control system (1) comprising at least a processor (3), a memory (4), a first data transmission element (5), and a secure element (6), wherein
the first data transmission element (5) is configured to receive a control signal (7), the control signal (7) being configured to control the automotive application (2); and
the processor (3) is configured to
determine whether the received control signal (7) is authorized or not;
increase an attack counter (8) in the memory (4), if the control signal (7) is not authorized;
lock the secure element (6), if the attack counter (8) is equal or higher than a locking value (9) predefined in the memory (4); and
unlock the secure element (6) after a secure function (10) has been performed successfully.

9. The control system (1) of claim 8, wherein the processor (3) is further configured to reset the attack counter (8) in the memory (4) after the secure function (10) has been performed.

10. The control system (1) of claim 8 or 9, wherein the processor (3) is further configured to block a processing of control signals (7) that are not authorized.

11. The control system (1) of any one of claims 8 to 10, wherein the processor (3) is further configured to process control signals (7) that are authorized to control the automotive application (2), and to increase an authorized access counter (11) in the memory (4) for each processed authorized control signal (7).

12. The control system (1) of claim 11, wherein the processor (3) is further configured to decrease the attack counter (8), if the authorized access counter (11) is equal to or higher than a predefined reduction value (12) in the memory (4).

13. The control system (1) of any one of claims 8 to 12, wherein the processor (3) is further configured to evaluate an attack threat level (13) for an unauthorized control signal (7), and to increase the attack counter (8) by a predefined threat value (14), that depends on the evaluated attack threat level (13).

14. The control system (1) of any one of claims 8 to 13, wherein for performing the secure function (10), the processor (3) is configured to process one or more authorized control signals (7) and receive an authorization confirmation (15) via a second data transmission element (16).

15. A computer program product comprising instructions which, when the program is executed by a computer, cause the computer to carry out the method (100) of any one of claims 1 to 7.
